**Europäisches Patentamt**

(19) **European Patent Office**

**Office européen des brevets**

(11) Veröffentlichungsnummer: **0 188 651**
**B1**

(12) **EUROPÄISCHE PATENTSCHRIFT**

(45) Veröffentlichungstag der Patentschrifft:
**07.02.90**

(21) Anmeldenummer: **85106093.9**

(22) Anmeldetag: **17.05.85**

(51) Int. Cl. ⁵: **F 16 J 15/32, F 16 J 15/56,**
**F 16 C 33/74, F 16 C 31/02**

(54) **Dichtung.**

(30) Priorität: **17.01.85 DE 3501334**

(43) Veröffentlichungstag der Anmeldung:
**30.07.86 Patentblatt 86/31**

(45) Bekanntmachung des Hinweises auf die Patenterteilung:
**07.02.90 Patentblatt 90/06**

㊽ Bennante Vertragsstaaten:
**AT BE DE FR GB IT NL SE**

(56) Entgegenhaltungen:
**DE-A-2 113 557**
**DE-A-2 530 097**
**FR-A-2 379 971**
**FR-A-2 435 628**
**GB-A-1 192 568**

(73) Patentinhaber: **Firma Carl Freudenberg**
**Höhnerweg 4**
**D-6940 Weinheim/Bergstrasse (DE)**

(72) Erfinder: **Beutel, Achim**
**Am Bannholz 11**
**D-6940 Weinheim (DE)**

(74) Vertreter: **Weissenfeld-Richters, Helga, Dr.**
**Höhnerweg 2**
**D-6940 Weinheim/Bergstrasse (DE)**

**Beschreibung**

Die Erfindung betrifft eine Dichtung für ein hin- und hergehendes und/oder ein sich drehendes Maschinenteil, umfassend einen ruhend festgelegten Haltering, einen auf dem Haltering abgestützten Führungsring mit einer Führungsfläche sowie wenigstens einen Dichtring aus elastomerem Werkstoff, der den Führungsring berührt und eine Dichtlippe aufweist, wobei die Dichtlippe und die Führungsfläche an dem relativ beweglichen Maschinenteil anliegen und wobei der Dichtring und der Führungsring flüssigkeitsdicht aneinander festgelegt sind.

Eine Dichtung der vorgenanten Art wird in der FR-A-2 435 628 und in der US-A-4 205 595 beschrieben. Sie hat die Gestalt eines doppelseitig wirkenden Kolbens für einen Pneumatik-Zylinder und weist demzufolge zwei axial in entgegengesetzter Richtung vorspringende Dichtlippen auf. Der Führungsring ist in einer nach außen geöffneten Nut des Halteringes gelagert und seinerseits mit einer Führungsfläche an der Innenwandung des Pneumatik-Zylinders abgestützt. Die relative Zuordnung der beiden Dichtlippen zu der Zylinderinnenwandung ist aufgrund dieser Ausbildung auch dann stabil, wenn Querkräfte durch die Kolbenstange eingeleitet werden. Die diesbezüglichen Verhältnissen ändern sich aber grundlegend bei Einleitung eines Kippmomentes in die Dichtung, was beispielsweise auftreten kann, wenn die Kolbenstange während ihres Hubes einer ggf. variierenden Biegebelastung ausgesetzt ist.

Entsprechende Bedingungen sind bei vielen Arbeitszylindern anzutreffen und können beispielsweise auch durch das Eigengewicht der Kolben-/Zylindereinheit verursacht sein. Sie sind zumeist gleichgerichtet und haben wegen der in Umfangsrichtung variierenden Zuordnung der Dichtlippen zu der Zylinderwandung wenig optimale Gebrauchseigenschaften zur Folge und können zu einem vorzeitigen Ausfall der Dichtung führen.

Der Erfindung liegt die Aufgabe zugrunde, eine Dichtung der eingangs genannten Art derart weiterzuentwickeln, daß auch bei Einleitung von Kippbewegungen in die Dichtung eine Veränderung der Zuordnung der Dichtlippen zu dem relativ beweglichen Maschinenteil nicht eintritt.

Diese Aufgabe wird erfindungsgemäß bei einer Dichtung der eingangs genannten Art dadurch gelöst, daß der Haltering auf der dem Führungsring zugewandten Seite von einer seinen Mittelpunkt umschließenden Kugelfläche begrenzt ist und daß der Führungsring, bezogen auf die Dichtungsachse, kippbar auf der Kugelfläche abgestützt ist. Auch bei Einleitung von Querkräften ist eine exzentrische Verlagerung des Mittelpunktes der Dichtung in bezug auf die Mittellinie des relativbeweglichen Maschinenteiles nicht zu befürchten. Die Zuordnung des Dichtringes und insbesondere seiner Dichtlippen zu dem relativbeweglichen Maschinenteil ist bei der erfindungsgemäß vorgeschlagenen Ausführung unabhängig von der Einleitung evtl. Querkräfte und/oder Kippbewegungen immer gleichbleibend. Die Querkräfte werden, ähnlich wie bei den bekannten Ausführungen, durch den unmittelbar auf dem Haltering festgelegten Führungsring in die Oberfläche des relativbeweglichen Maschinenteiles eingeleitet. Sie können sich daher nicht nachteilig auswirken in bezug auf die relative Zuordnung der Dichtlippen zu dem relativ beweglichen Maschinenteil, wobei es von besonderem Vorteil ist, daß dem Führungsring keinerlei Abdichtungsfunktionen zukommen. Er kann daher aus einem Werkstoff erzeugt werden, der sich gegenüber dem relativ beweglichen Maschinenteil durch einen niedrigen Reibungskoeffizienten, eine minimale Verformung und eine gute Abriebbeständigkeit auszeichnet.

Kippbewegungen werden bei der erfindungsgemäß vorgeschlagenen Ausführung von den Dichtlippen ferngehalten durch die kippbare Abstützung des den Dichtring tragenden Führungsringes auf dem Haltering. Auch erhebliche Kippbelastungen des Halteringes können dabei nicht mehr zu einer Veränderung der relativen Zuordnung der Dichtlippen zu dem relativ beweglichen Maschinenteil führen. Ihr Querschnittprofil kann daher allein unter dem Gesichtspunkt der Erzielung optimaler Abdichtungsergebnisse gestaltet werden, wobei Tandemanordnungen und die Verwendung von sekundären Andrückmitteln im Gegensatz zu entsprechenden Ausführungen nach dem Stande der Technik ohne weiteres in die Überlegungen mit einbezogen werden können.

Für die Erzeugung des Dichtringes können alle einschlägig verwendeten Werkstoffe zur Anwendung gelangen, beispielsweise auch solche auf Polytetrafluorethylen-Basis. Bevorzugt werden jedoch elastomere Werkstoffe verwendet, weil diese kostengünstig verfügbar und einschlägig besonders erprobt sind. Sie lassen sich durch eine Vulkanisierung leicht mit dem Führungsring verbinden.

Die vorgeschlagene Dichtung eignet sich für alle Anwendungsfälle, in denen die abzudichtenden Teile einander koaxial umschließen relativ zueinander eine hin- und hergehende und/oder Drehbewegung ausführen. Je nach Anwendungsfall ist es dabei vorgesehen, den den Dichtring aufweisenden Führungsring an der Außenseite oder an der Innenseite des Halteringes anzuordnen. Neben der Abdichtung von Kolben und Stangen ist daher ebenso die Abdichtung von Achsen oder Wellen möglich.

Der Führungsring kann in dem die Kugelfläche berührenden Bereich entsprechend deren Verlauf kugelförmig gewölbt sein. Hierdurch wird eine besonders gute Relativbeweglichkeit gewährleistet. In Hinblick auf die Erzielung einer niedrigen Flächenpressung hat es sich daneben als vorteilhaft bewährt, wenn der Führungsring und der Haltering einander möglichst großflächig berühren. Vor allem in Fällen, in denen der Führungsring aus einem Werkstoff geringerer Verformbarkeit besteht als der Haltering ist die Einhaltung dieser Bedingung wichtig. Sie läßt sich leicht erfüllen durch eine die axialen Begrenzungen der Kugelfläche beiderseits überragende Verlängerung der entsprechenden kugelligen Wölbung des Führungsringes, wobei die Verlängerung so bemessen ist, daß der Führungsring auch bei Einleitung der max. Kippbewegung stets an der Kugelfläche in ihrer Gesamtheit anliegt. In vielen Anwendungsfällen ergibt sich allein durch die gegenseitige Abstützung des Führungsringes auf dem Haltering eine ausreichende Abdichtung zwischen beiden Teilen. Qualifizierte Anwendungen erfordern indessen die Anwendung wenigstens eines sekundären Dichtmittels in diesem Bereich, wobei es sich als zweckmäßig erwiesen hat, wenn das Dichtmittel aus wenigstens einem membranartig ausgebildeten Ringvorsprung des Dichtringes besteht, der dichtend an dem Haltering anliegt. Der Ringvorsprung kann mit dem Haltering auch fest verbunden sein, beispielsweise durch Vulkanisation, was eine absolute Abdichtung gewährleistet. Es versteht sich von selbst, daß der membranartig ausgebildete Ringvorsprung die relative Beweglichkeit zwischen dem Führungsring und dem Haltering nicht nennenswert beeinflussen darf. Die Einhaltung dieser Bedingung läßt sich aber leicht durch eine entsprechende Dimensionierung gewährleisten.

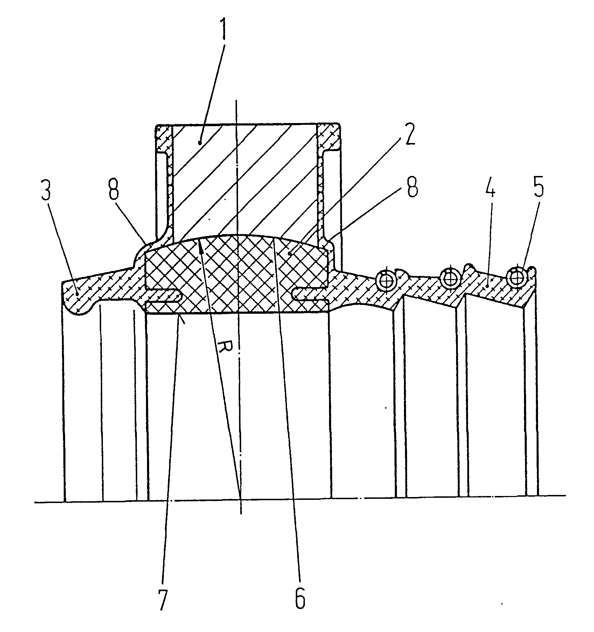

Der Gegenstand der vorliegenden Erfindung wird nachfolgend anhand der in der Anlage beigefügten Zeichnung weiter erläutert. Die Zeichnung zeigt eine Dichtung der erfindungsgemäß vorgeschlagenen Art in halbgeschnittener Darstellung. Sie dient zur Abdichtung einer Kolbenstange, und der Haltering 1 umschließt aus diesem Grunde den Führungsring 2 auf seiner Außenseite.

Der Haltering ist innenseitig durch die seinen Mittelpunkt in gleichbleibendem Abstand umschließende Kugelfläche 6 begrenzt. An der Kugelfläche 6 liegt ganzflächig der Führungsring 2 mit seiner Außenseite an. Sie weist eine der Kugelfläche 6 entsprechende Wölbung auf, welche in axialer Richtung beiderseits über den Haltering 1 hinaus verlängert ist, um auch bei Einleitung einer Kippbewegung in den Führungsring 2 stets eine möglichst große Anlagefläche in bezug auf den Haltering 1 zur Verfügung zu haben.

Der Haltering 1 besteht aus Stahl, der Führungsring 2 aus PTFE. Eine Relativverlagerung zwischen beiden Teilen setzt daher keinerlei Überwindung von Haftreibung voraus, sondern der Führungsring vermag unmittelbar entsprechenden Kippbewegungen des nicht gezeichneten, relativ beweglichen Maschinenteiles zu folgen. Dieses liegt nach dem Einbau der Dichtung mit seiner Oberfläche an der Führungsfläche 7 des Führungsringes 2 an. Auch in diesem Bereich kann sich daher nicht der sogenannte Stick-Slip-Efekt ergeben, der bei anderen Werkstoffpaarungen schnell zu einer Zerstörung einer der beiden beteiligten Reibungskomponenten führt. Eine besondere Schmierung ist nicht erforderlich.

In Richtung der Außenseite ist an den Führungsring 2 eine ringförmige Staublippe 3 aus gummielastischem Werkstoff anvulkanisiert. Sie liegt nach dem Einbau des abgedichteten Maschinenteiles mit einem ballig ausgebildeten Ringwulst an dessen Oberfläche an.

An den Führungsring 2 ist auf der dem abgedichteten Medium zugewandten Seite eine Dichtlippe 4 anvulkanisiert, die drei unabhängig voneinander angepreßte Dichtkanten aufweist. Die Anpreßbedingungen in bezug auf die Oberfläche des relativ beweglichen Maschinenteiles sind bei allen Dichtkanten auch bei Einleitung einer Kippbewegung absolut gleich, was es ermöglicht, die spezifische Ausbildung der Dichtkanten und deren Anpressung an die Oberfläche des relativ beweglichen Maschinenteiles ohne die bisher üblichen Kompromisse allein in Hinblick auf die Erzielung einer optimalen Wirksamkeit festzulegen. Sowohl das Abdichtungsergebnis als auch die Dauerstandfestigkeit lassen sich hierdurch wesentlich verbessern. Auch die Anwendung von sekundären Andrückelementen in Gestalt von Ringwendelfedern 5 ist ohne weiteres möglich.

Sowohl die Staublippe 3 als auch die Dichtlippe 4 sind durch einstückig angeformte Ringvorsprünge 8 mit dem Haltering 1 verbunden. Die Ringvorsprünge 8 sind im Bereich des Außenumfanges des Halteringes 1 axial verdickt, um in diesem Bereich statische Dichtungen zur Abdichtung des anschließenden relativ ruhenden Maschinenteiles zu bilden. Sie sind in diesem Bereich zusätzlich mit dem Haltering 1 durch Vulkanisation verbunden.

In dem Bereich der kugeligen Wölbung des Führungsringes 2 ist zwischen den Ringvorsprüngen und dem Führungsring 2 eine feste Bindung nicht vorhanden, sondern die Teile liegen nur mehr oder weniger lose aufeinander auf. Zusätzlich ist die Schichtdicke der Ringvorsprünge sehr gering bemessen, wodurch sie einer relativen Verkantung des Führungsringes 2 in bezug auf den Haltering 1 einen nennenswerten Widerstand nicht entgegenzusetzen vermögen. Dennoch verhindern sie das Eindringen von abgedichtetem Medium oder Staub in die gegenseitige Berührungszone zwischen beiden Teilen und damit eine unerwünschte Leckage.

## Patentansprüche

1. Dichtung für ein hin- und hergehendes und/oder ein sich drehendes Maschinenteil, umfassend einen ruhend festgelegten Haltering (1), einen auf dem Haltering (1) abgestützten Führungsring (2) mit einer Führungsfläche (7) sowie wenigstens einen Dichtring (3, 4) aus elastomerem Werkstoff, der den Führungsring (2) berührt und eine Dichtlippe aufweist, wobei die Dichtlippe und die Führungsfläche (7) an dem relativ beweglichen Maschinenteil anliegen und wobei der Dichtring (3, 4) und der Führungsring (2) flüssigkeitsdicht aneinander festgelegt sind, dadurch gekennzeichnet, daß der Haltering (1) auf der dem Führungsring (2) zugewandten Seite von einer seinen Mittelpunkt umschließenden Kugelfläche (6) begrenzt ist und daß der Führungsring (2), bezogen auf die Dichtungsachse, kippbar auf der Kugelfläche (6) abgestützt ist.

2. Dichtung nach Anspruch 1, dadurch gekennzeichnet, daß der Dichtring (4) an den Führungsring (2) anvulkanisiert ist.

3. Dichtung nach Anspruch 1 - 2, dadurch gekennzeichnet, daß der Führungsring (2) in dem die Kugelfläche (6) berührenden Bereich entsprechend deren Verlauf kugelig gewölbt ist.

4. Dichtung nach Anspruch 1 - 3, dadurch gekennzeichnet, daß der Führungsring (2) durch wenigstens ein sekundäres Dichtmittel gegenüber dem Haltering (1) abgedichtet ist.

5. Dichtung nach Anspruch 4, dadurch gekennzeichnet, daß das sekundäre Dichtmittel aus wenigstens einem membranartig ausgebildeten Ringvorsprung (8) des Dichtringes (4) besteht, der dichtend an dem Haltering (1) anliegt.

6. Dichtung nach Anspruch 5, dadurch gekennzeichnet, daß der Ringvorsprung (8) und der Haltering (1) fest verbunden sind.

## Claims

1. A seal for a machine part which moves back and forth and/or rotates, comprising a stationary-mounted retaining ring (1), a guide ring (2) supported on the retaining ring (1) having a guide surface (7), as well as at least one sealing ring (3, 4) made of elastomeric material which contacts the guide ring (2) and has a sealing lip, the sealing lip and the guide surface (7) resting on the relatively movable machine part and the sealing ring (3, 4) and the guide ring (2) being mounted on each other in a fluid-tight manner, characterized in that the retaining ring (1) is bounded on the side facing the guide ring (2) by a ball surface (6) surrounding its central point and in that the guide ring (2) is supported tiltably, relative to the seal axis, on the spherical surface (6).

2. A seal according to claim 1, characterized in that the sealing ring (4) is vulcanised onto the guide ring (2).

3. A seal according to either of claims 1 and 2, characterized in that the guide ring (2) is bulbously curved in the region contacting the spherical surface (6) in a manner corresponding to the course of the latter.

4. A seal according to any of claims 1 to 3, characterized in that the guide ring (2) is sealed off from the retaining ring (1) by at least one secondary means of sealing.

5. A seal according to claim 4, characterized in that the secondary means of sealing is composed of at least one annular projection (8), of membraneous design, of the sealing ring (4) which rests on the retaining ring (1) in a sealing manner.

6. A seal according to claim 5, characterized in that the annular projection (8) and the retaining ring (1) are firmly connected.

## Revendications

1. Bague d'étanchéité pour une pièce de machine rotative et/ou en mouvement alternatif comprenant une bague de fixation (1) à montage fixe, une bague de guidage (2) prenant appui sur la bague de fixation (1) et avec une surface de guidage (7), ainsi qu'au moins une bague d'étanchéité (3, 4) en matériau élastomère, qui vient au contact de la bague de guidage (2) et qui présente une lèvre d'étanchéité, ladite lèvre d'étanchéité et la surface de guidage (7) appuyant sur la pièce de machine en mouvement relatif tandis que la bague d'étanchité (3, 4) et la bague de guidage (2) sont assemblées l'une à l'autre de manière étanche aux liquides, caractérisée en ce que la bague de fixation (1) est délimitée, sur le côté tourné vers la bague de guidage (2), par une surface sphérique (6) entourant son centre et que la bague de guidage (2) prend appui sur la surface sphérique (6) avec possibilité de basculement par rapport à l'axe de la bague d'étanchéité.

2. Bague d'étanchéité selon la revendication 1, caractérisée en ce que la bague d'étanchéité (4) est fixée par vulcanisation à la bague de guidage (2).

3. Bague d'étanchéité selon les revendications 1 et 2, caractérisée en ce que la bague de guidage (2) est cintrée en forme de sphère dans la zone au contact de la surface sphérique (6) et de manière à s'adapter à celle-ci.

4. Bague d'étanchéité selon la revendication 1 - 3, caractérisée en ce que la bague de guidage (2) est rendue étanche par rapport à la bague de fixation (1) grâce à au moins un dispositif d'étanchéité secondaire.

5. Bague d'étanchéité selon la revendication 4, caractérisée en ce que le dispositif d'étanchéité secondaire est constitué d'au moins une saillie annulaire (8) en forme de membrane de la bague d'étanchéité (4), qui appuie de manière étanche sur la bague de fixation (1).

6. Bague d'étanchéité selon la revendication 5, caractérisée en ce que la saillie annulaire (8) et la bague de fixation (1) sont assemblées de manière fixe.